# EUROPEAN PATENT APPLICATION

(11) **EP 2 124 179 A1**
(43) Date of publication of application: **25.11.2009**
(21) Application number: 09160872.9
(22) Date of filing: 21.05.2009
(51) Int. Cl.: G06Q 30/00

(54) **System and method for online publication**

(30) Priority: 21.05.2008 US 124838
(71) Applicant: Shanda Literature Limited, Central Hong Kong (HK)
(72) Inventor: Wu, Wenhui, Shanghai, 201203 (CN)
(74) Representative: Clark, Jane Anne

(57) **Abstract**

System and method for online publication. According to an embodiment, a user stores contents on a web site, and based on the screening process and negotiated terms, the user is compensated accordingly. In certain embodiments, a user is compensated based on results of a periodical competition program offered by the web site. For example, a user whose writing wins a weekly contest, which is decided by subscribers, is awarded a publishing contract. In certain aspects of the invention, various techniques are employed to protect user contents.

## Description

### BACKGROUND OF THE INVENTION

This patent application relates in general to online publication methods. More specifically, embodiments of the present invention provide a system and method that allow individuals to publish contents online and compensate these individuals based a variety of schemes. For example, an author stores contents on a web site, and based on the screening process and negotiated terms, the author is compensated accordingly. In certain embodiments, an author is compensated based on results of a periodical competition program offered by the web site. For example, an author whose writing wins a weekly contest, as determined by the users, is awarded a publishing contract. In certain aspects of the invention, various techniques are employed to protect the author's work product and/or contents. It is to be understood that embodiments of the present invention have wide range of applicability, which can be applied to video processing, imaging processing, image viewing, and others.

For a very long time, human knowledge and thoughts have been shared with one another through printed materials. As the use of the Internet becomes increasingly popular, many readers have started reading e-books online, which is direct and convenient as compared with conventional printed books and may reduce the number of books circulated. The way in which an author's book is published and the way in which the book is made available to a reader conventionally are time and labor consuming. Negotiation and discussion between the publisher and author is necessary before a book can be formally published, which typically takes a long time and involves complicated procedures. Once a book is published, a reader often needs to go to a library or a bookshop, or the like, to view a book. Over the last decade, with the advent of Internet technologies, online publication has become increasingly popular as a vehicle for sharing information and writing materials. In the early years of the Internet, writers and authors often made their writing freely available and relied on online advertising to obtain monetary compensation for their work. Some authors feel that they need to better protect their work and made their writing available only to paying customers. Unfortunately, neither scheme has worked well in the past.

Therefore, it can be seen that an improved method and system for online publishing is desired.

### BRIEF SUMMARY OF THE INVENTION

This patent application relates in general to online publication methods. More specifically, embodiments of the present invention provide a system and method that allow an author to publish contents online and compensate this author based a variety of schemes. It is to be understood that embodiments of the present invention have wide range of applicability, which can be applied to video processing, imaging processing, image viewing, and others.

According to an embodiment, an author stores contents on a web site, and based on the screening process and negotiated terms, the author is compensated accordingly. In certain embodiments, an author is compensated based on results of a periodical competition program offered by the web site. For example, an author whose writing wins a weekly contest, which is decided by subscribers, is awarded a publishing contract. In certain aspects of the invention, various techniques are employed to protect author's contents.

According to another embodiment, the present invention provides a method for publishing one or more contents online. The method includes providing a user interface that includes a log on screen. The method also includes receiving user inputs from a first user. The method includes registering the first user based on the user inputs. The method also includes receiving a first content for publishing online. In addition, the method includes storing the first content in storage, the storage having restricted access. Furthermore, the method includes analyzing the first content. The method further includes publishing the first content based on a conclusion from analyzing the first content. The method additionally includes selecting a pricing model. The method also includes forming a contractual relationship based on the pricing model and an agreement between user and a publisher. The method also includes receiving a second content. The method further includes processing the second content based on the contractual relationship. The method includes providing a payment to the user for the second content based on the contractual relationship. The method additionally includes accessing the first and second contents by a second user.

According to yet another embodiment, the present invention provides a method for publishing text online. The method includes providing a user interface for entering onto a web site. The method also includes receiving user inputs. Also, the method includes registering the user based on the user inputs. Additionally, the method includes associating the user with identification. Furthermore, the method includes receiving a user request for viewing texts. Moreover, the method includes retrieving the texts in response to the user request. In addition, the method includes processing the text using a text format based on the paying user's (for example, junior member/senior member/monthly paying member, etc.) identification, the text format including spacing distance. The method includes generating an image containing the texts in accordance with the text format. The method also includes displaying the image.

Many benefits are achieved by way of the present invention over conventional techniques. Among other things, embodiments of the present invention allow authors to conveniently publish their works on publishing web site, which provides various schemes for the authors to get compensation for their work. Having many user-created contents, the publishing web site according to the present invention is convenient to users, who pay only to one entity (i.e., the publishing web site) but are able to view a variety of contents. In addition, embodiments of the present invention offer flexible terms for authors. For example, an author may receive royalties and/or licensing fee for her work. In certain embodiments, the present invention provides security features to protect contents' copyright. Depending upon the embodiment, one or more of these benefits may be achieved. These and other benefits will be described in more detail throughout the present specification and more particularly below.

Various additional objects, features and advantages of the present invention can be more fully appreciated with reference to the detailed description and accompanying drawings that follow.

### BRIEF DESCRIPTION OF THE DRAWINGS

Figure 1 is a simplified flow diagram illustrating a processing for registering and serving users according to an embodiment of the present invention.

Figure 1A is a simplified diagram illustrating a user interface according to an embodiment of the present invention.

Figure 2 is a simplified flow diagram illustrating a process for a writer to publish work on a web site according to an embodiment of the present invention.

Figures 3A and 3B are a simplified diagram illustrating text images that include identification information according to embodiments of the present invention.

Figure 4 is a simplified diagram illustrating an interface for the online author according to an embodiment of the present invention.

Figure 5 is a simplified diagram illustrating text submitted by authors for online competition according to an embodiment of the present invention.

Figure 6 shows a functional block diagram of an example of a system according to an embodiment of the present invention.

### DETAILED DESCRIPTION OF THE INVENTION

This patent application relates in general to online publication methods. More specifically, embodiments of the present invention provide a system and method that allow authors to publish contents online and compensate these individuals based a variety of schemes. For example, an author stores contents on a web site, and based on the screening process and negotiated terms, the author may be compensated accordingly. In certain embodiments, an author is compensated based on results of a periodical competition program offered by the web site. For example, an author whose writing wins a weekly contest, which is decided by subscribers, is automatically awarded a publishing contract. In certain aspects of the invention, various techniques are employed to protect an author's contents. It is to be understood that embodiments of the present invention have wide range of applicability, which can be applied to video processing, imaging processing, image viewing, and others.

As explained above, various conventional online publishing techniques are often inadequate. For example, a website such as the Wall Street Journal requires its users to pay a fee for viewing its journalistic contents. This model works well for magazines and newspapers. However, this model does not work well when an individual writer and/or publisher desires to do the same. Whereas many readers would agree to pay for a magazine website where many articles can be accessed, very few readers would agree to pay for access to a few articles.

In another conventional scheme, writers and/or publishers rely on online advertising, such as pop-ups advertisements, to derive revenue for their work. While this type of scheme is used by many, it is often fails to work. Among other things, readers generally dislike advertisements that are embedded into the contents, and since the embedded ads are usually not well targeted to the reader, this type of arrangement often fails to bring in revenue to the writers and/or publishers.

Therefore, it is to be appreciated that embodiments of the present invention provide an efficient and cost-effective way for authors to publish contents online and be compensated for such contents. In certain embodiments, the present invention provides techniques that protect the copyright of authors. These embodiments are described in detail below.

In certain embodiments, the present invention provides an Internet-based system and method for contents online publishing and viewing, which has various advantages over conventional systems. For example, embodiments of the present invention take full advantage of the Internet which is fast, convenient and geographically unlimited. Among others, the present invention offers a way of operating that reduces the time required for the contract negotiation process between the author and the publisher and shortens the period from the author's delivery to the publisher's acceptance. In addition, the allocation of earnings between the author and publisher may be simplified.

In an exemplary embodiment, the present invention provides a system for e-book online operation through which users may view the submitted online content. A user may, according to her preference, apply for one of the following different types of membership: a junior member, a senior member, or a monthly paying member.

As merely an example, the author registers and submits her contents on the webpage provided by the publisher. The publisher determines whether to sign a contract with the author according to the submitted content. After a contract is signed, the author and the publisher receive their earnings based upon negotiated terms. For example, a default contract, which is agreed by the author when submitting her contents, between the author and publisher is used to determine the distribution of earnings.

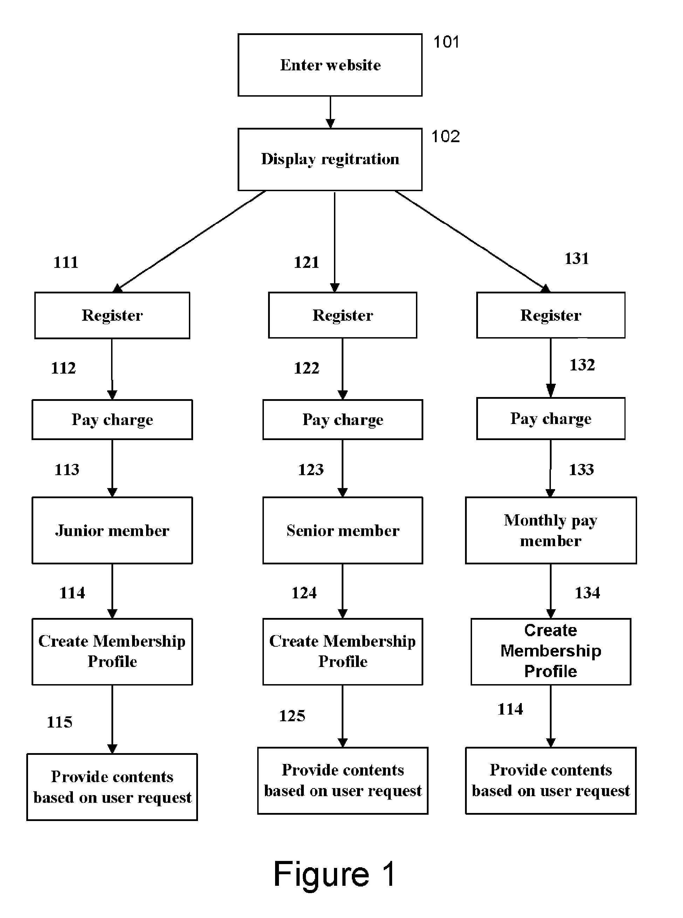

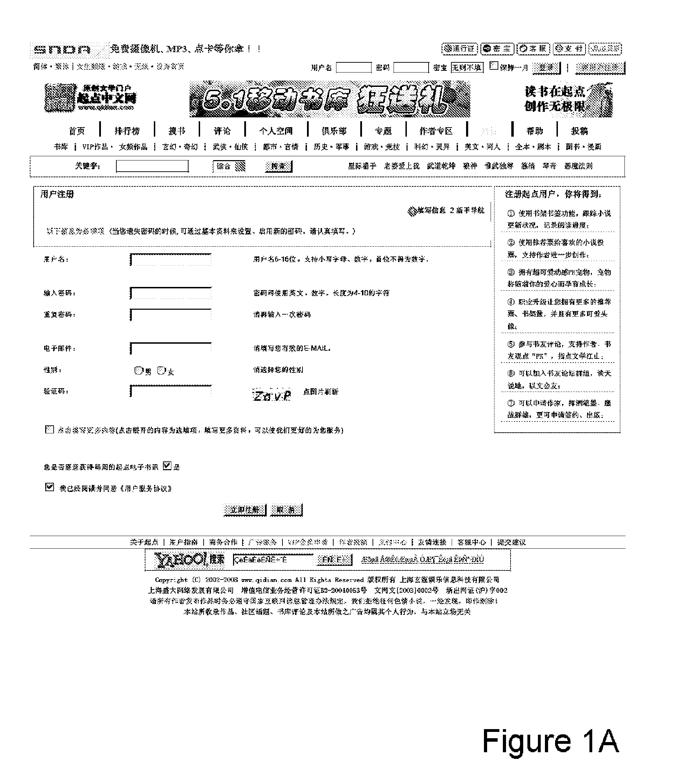

As explained earlier, for authors and/or the publisher to receive revenue for their works, the publishing web site needs to derive revenue from its users. According to an embodiment, a special user registration process is used. Figure 1 is a simplified flow diagram illustrating a processing for registering and serving users according to an embodiment of the present invention. This diagram is merely an example, which should not unduly limit the scope of the claims. One of ordinary skill in the art would recognize many variations, alternatives, and modifications. As an example, various steps may be added, remove, replaced, repeated, rearranged, modified, and/or overlapped.

As shown in Figure 1, a web page is provided when a user enters a publishing web site at step 101. As an example, contents placed on a publishing web site (e.g., containing copyrighted contents) contain public sections and member-only sections. To ensure that the publisher profits from online business, a portion of the contents is arranged as public sections and the remaining potions as member-only pay-to-view sections. Many contents are available only for paying members. For example, the public sections may be viewed by both paying members and non-paying members for free. Paying members are defined into various types, which include junior member, senior member, and monthly paying member. Each type of membership is allocated special rate and access to certain contents. In a specific embodiment, each type membership receives a certain amount of virtual online "currency" that can be used to access online contents. A payment is needed to view member sections, according to different types of membership. In a specific embodiment, the web site includes a user interface for user registration. Figure 1A is a simplified diagram illustrating a user interface according to an embodiment of the present invention.

During the registration process, a user and/or reader may choose to become a paying user (111) and charges his personal account with a certain amount of money (112) to become a junior member (113) and/or a senior member.

The amount of money charged into the account is converted into online virtual currency of a corresponding amount. After becoming a registered junior or senior member, the user is given certain privileges, e.g., he may read member-only content in the website for inexpensive fee which is paid by virtual online currency; may accumulate viewing points; may read sections of exclusively contracted works on this website in advance with online virtual currency; and may buy other books or magazines provided by the certain website with the current virtual currency.

As another option, the reader may choose to register as a senior member. A junior member may choose to be upgraded to a senior member (114) by paying a certain membership fee. Or a registered reader (121) may immediately become a senior member (123) after he charges his initially registered account (which includes online currency) with a predetermined amount (122). A senior member may read online contents at a lower price than junior member. In addition, a senior member may have access to a broader range of online contents than a junior member. For example, certain online contents are only accessible to senior members but not to junior member. In a specific embodiment, a user accumulates viewing points every time he reads content. Using the viewing points, the user can store more online content in her online personal library and has access to a senior member bookshelf. For example, a senior membership user may read sections of exclusively contracted works in advance with virtual currency of the website. The user may also buy other books or magazines provided by the website. In addition, the user may participate in various kinds of senior member-only activities hosted each year, etc.

In addition, the reader may register on the webpage (131) and buy months of reading privileges (132) to become a monthly paying member (133). A monthly paying member may, in the paid month, read any online contents provided by the publisher before the expiration date of the reading privileges.

Regardless the type of membership a user is registered and paid for, a membership profile is created and stored for that user. The membership profiles record the amount of membership points and/or allowed time of access (e.g., an access period of one month) of the users. In addition, the membership profile may include other information, such as user history, user preference, rights of giving comments to the online books, etc. In a specific embodiment, the membership profile includes membership specific identification that can be used to track copyrighted work. For example, a user who illegally redistributes online publications can be tracked down using the identification information.

Once a user is properly registered, the registered user is able to access various contents that are reserved for member viewing only. According to various embodiments, an online system according to our present invention dynamically converts electronic text into images files before displaying to protect copyright of the text. It is to be appreciated that, among other things, images text are much harder to duplicated using "copy and paste" technique that made copying text easy. For example, texts are formatted internally by a server into pages, which are converted into images (e.g., in JPEG, GIF, and other formats). To further protect copyright, the images are generated with a special code scheme.

In an embodiment, based on the registered user identification (e.g., the junior member identification, senior member identification, monthly paying member identification), a hash table is used to calculate spacing between punctuation marks and/or texts. The dynamically generated text images thus contain registered user identification information. For example, each use reviews a text-image that is unique to the user. Since the unique spacing among punctuation marks and/or texts is subtly implemented, such scheme does not impede a user's reading experience and is often unnoticeable to the user.

The unique coding scheme can be used to trace text images. For example, if a registered user copies a text image and posts it on a different web page, an administrator is able to determine which user copied the text images. For example, a special image processing program and the hash table is used to determine the user identification from the images. Once it is determined which user leaked the information, the administrator is able to pursue further actions, such as terminating the user account, suing the user for copyright infringement, etc.

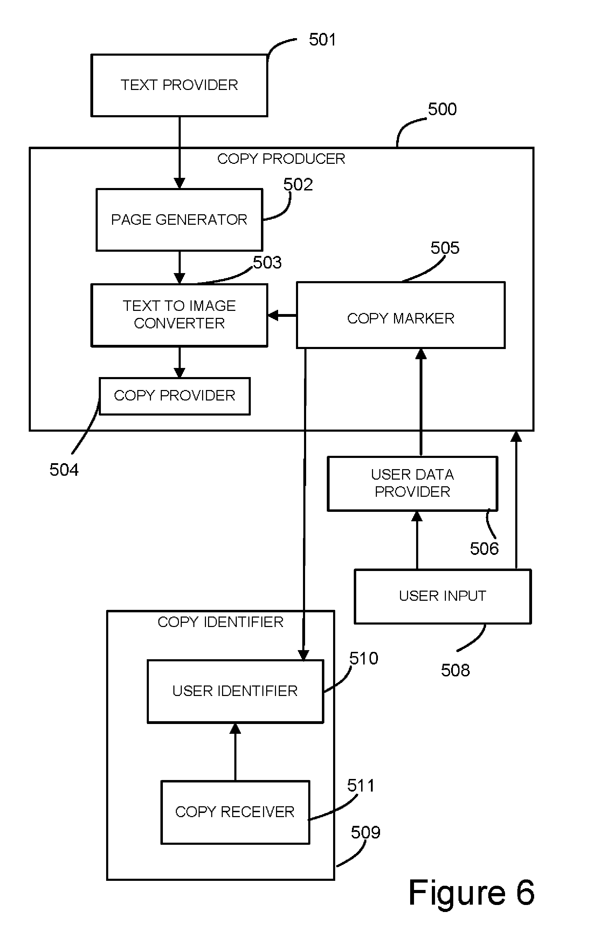

Figure 6 shows a functional block diagram of an example of a system embodying the invention. This system may be implemented by programming one or more computers by program instructions and/or data supplied on a computer readable medium or downloaded as a signal over a network or input directly by a user.

As shown in Figure 6, this system comprises a user input 508 which receives input from a user to enable the user to register themselves with the system and also to obtain copies. The user input 508 may, as discussed above be via a network connection such as the Internet and data may be input by the user via a web page.

The user input 508 is coupled to a user data provider 506 which stores data relating to a user once the user has registered with the system as described above. The user data provider and the user input are coupled to a copy producer 500 which is itself coupled to a text provider 501 which provides text data from which copies are to be produced for supply to a registered user. The text provider 501 may store the text in an internal data store, or may obtain text from a remote data store forming part of the system or via a network connection such as the Internet or any combination of these. As shown in Figure 6, the system also includes a copy identifier 509. It will be appreciated that the user input 508, user data provider 506, text provider 501, copy producer 500 and copy identifier 509 may be provided by programming of a single computer apparatus or may be provided by two or more coupled computing apparatus coupled directly or via a network connection.

The copy producer 500 comprises, in this example, a page generator 502 for converting the text data provided by the text provider into pages and a text to image converter 503 to convert the pages into image data in an image format such as one of the formats mentioned above. The copy producer 500 also includes a copy provider 504 for supplying the image data as the produced copy to a user, for example as described above for supplying the image data as the produced copy via the Internet and a web browser.

The copy producer 500 also has a copy marker 505 which is coupled to the text to image converter 503 to enable the copy being produced to be subtly altered as discussed above so that the copy is uniquely identified with the registered user requesting the copy. In this example, the copy marker 505 is, as discussed above, arranged to adjust the spacing of at least part of the text so that the resulting copy is subtly altered in a manner which is unique to the user requesting the copy or to the specific copy request. For example, as discussed above, the copy marker 505 may use a hash table to calculate a space in between punctuation marks and/or texts on the basis of the registered user identification. Thus, when a user, via the user input 508, requests a copy of a specific text, the page generator 502 converts the text to pages, if necessary, and the text to image converter 503 and copy marker 505 act to convert the text to images with the spacing (e.g., spacings among words and/or characters) of at least some of the text adjusted in accordance with data identifying the user so that the resulting copy is unique to the particular user. In a specific embodiment, the text to image converter 503 converst ASCII text into images in GIF format, and each of the image fits into a size optimized for displaying on a computer screen.

Where the copy identifier 509 is provided, then, when posting of a copy of a text on a different website or page is identified and supplied to the copy receiver 511, the user identifier 510 may analyse the received text image data to check the text spacing within the image data and then access the copy marker 505 so as to determine, on the basis of the identified spacing, the identity of the user for whom the copy was produced.

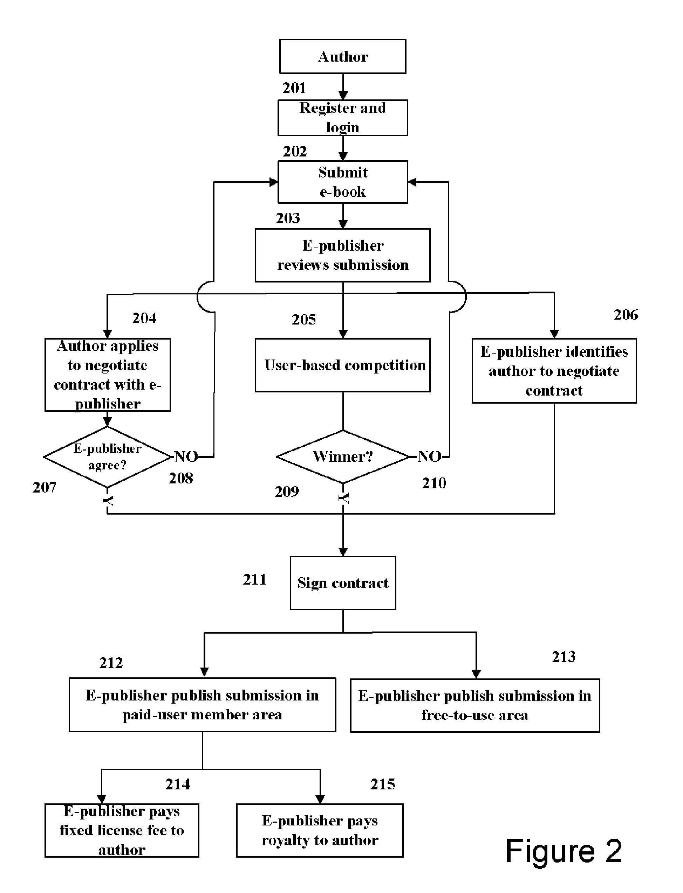

It is to be understood that the process described above can be modified according to specific applications. Figure 2 is a simplified flow diagram illustrating a process for a writer to publish work on a web site according to an embodiment of the present invention. This diagram is merely an example, which should not unduly limit the scope of the claims. One of ordinary skill in the art would recognize many variations, alternatives, and modifications. As an example, various steps may be added, removed, replaced, modified, repeated, rearranged, and/or overlapped.

Various steps illustrated in Figure 2 for an author to publish contents online are described below.

In Step 1, the author registers to become an online author (201). In an embodiment, any username registered by the author (with exception for those including special foreign language characters, special symbols, and/or legally disabled words) may be used. Depending on the application, the author may submit a brief introduction. The author is also offered an opportunity to submit an extract of the book of a certain length. In addition, the author is asked to submit verifiable personal information, (e.g., ID number, contact information, etc.). It is to be appreciated that in various countries and regions, it is required for publishers (both online publisher and traditional printer) to have true identification information of the author. For example, Chinese government sometimes requires publisher to provide personal information of authors for various reasons to ensure that the online content do not contain any improper material and/or information (e.g., anti-government material, etc.). The personal information of the author is securely stored by the web site. For example, this information is kept in confidence and is only visible to the publisher and the author.

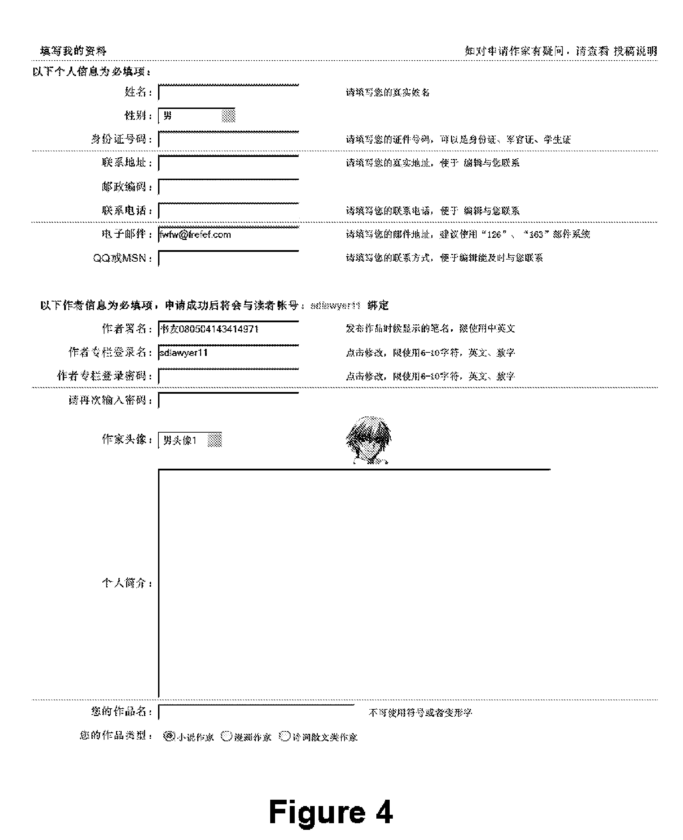

As an example, Figure 4 is a simplified diagram illustrating an interface for the online author according to an embodiment of the present invention. This diagram is merely an example, which should not unduly limit the scope of the claims. One of ordinary skill in the art would recognize many variations, alternatives, and modifications.

Now referring back to Figure 2. In Step 2, the author logs into the author's space and submits contents (202). At this point, the author is asked to upload an extract of these contents of a certain length which will be presented on the webpage after the publisher performs online verification. For example, this part is only visible to the author and the publisher's editor.

In Step 3, the content submitted by the author is entered into the publisher's book database and the publisher reviews the content of the submitted text (203). After the text is entered into the publisher's book database, the currently presented content is added to a public board. The author may update the public sections of the text, and the updated content is refreshed. Each update should involve more than a predetermined quantity of characters. The public content is visible to the readers, the author and the publisher's editor.

In certain embodiments, the publisher reviews the submitted text to ensure various inappropriate and/or illegal contents not to be displayed in China website. For example, contents subject to non-publication include pornography, superstition, violence, anti-government text, and so on. Depending on the main targeted reader base, the publisher may use different criteria. The reviewing process may be performed by an automated process, human screener, or both.

In Step 4, the author picks a revenue scheme in which the author can receive income for the text posted. As an example, the revenue scheme may also be based on the type of text to be published. For example, the revenue scheme depends on whether the submitted content is a part of a long work or a complete piece of work. Depending on the content of the text updated by the author, the publisher and the author negotiate with each other to determine the form of contracting.

In a scheme, the author may apply to the publisher for signing a contract (204). If the publisher agrees to sign a contract, the contract may be immediately signed (207); if the publisher does not agree to sign a contract with the author concerning the current work, the author may choose to resubmit the content of the e-book (208).

In another scheme, the author may choose to take part in a competition among monthly subscribed online text organized by the publisher. The winning text is awarded an opportunity to sign a contract as a monthly subscribed book (205) (209). In certain embodiments, the winning text is automatically offered a contract. For example, the contract for the winning text to a competition provides more attractive and lucrative terms than the text that has not won the competition. For a non-winning e-book, the author may choose to resubmit the content of the e-book (210). A detailed description of the contest is described below.

In a competition process, various criteria must be met before a text may be entered into a competition. As an example, the criteria include the following:
1. the text is submitted through proper channel;
2. the text has not already been signed a contract;
3. the author which already has a contract with the online publisher may not enter the competition;
4. each author may not enter more than one piece of text each month for the competition;
5. the length of the text is between 30,000 to 300,000 words;
6. there is no existing contract with any other publisher for the submitted text; and
7. the submitted text is original and free from copyright disputes.

Depending on application, there might be other conditions as well. In specific embodiment, an author agrees to certain regulations of the web site before submitting. In another embodiment, once a piece of text is submitted, the author should agree with certain terms and conditions related to the publication of the contents. The publisher posts the text onto the web site and starts counting the number of votes the text receives. Various rules are following during this process. For example, no promotion is done to the text to ensure fairness. The author has limited right in removing the text during the competition month. The publisher may also reserve various right regarding the update and removal of the text, which may be explicitly stated in the contract signed between the publisher and the author.

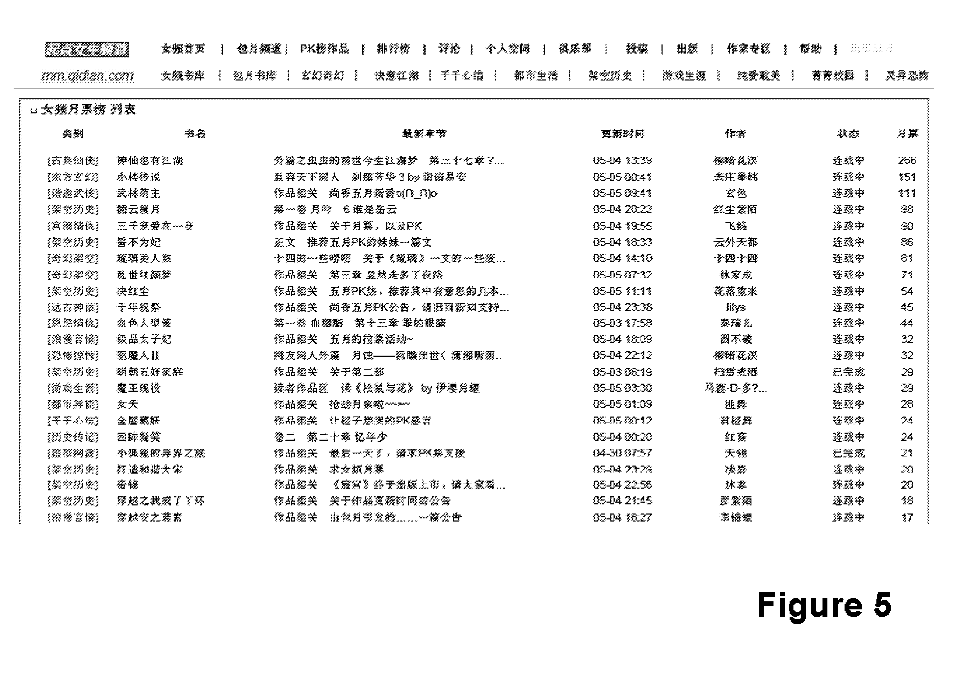

As an example, Figure 5 is a simplified diagram illustrating text submitted by authors for online competition according to an embodiment of the present invention. This diagram is merely an example, which should not unduly limit the scope of the claims. One of ordinary skill in the art would recognize many variations, alternatives, and modifications.

Now referring back to Figure 2. In some situation, the online publisher (e.g., during a screening process) may select a text submitted by an author and contact the author to negotiate (and/or to sign a contract) with the author concerning the selected text (206).

In Step 5, a contract is signed according to the form of contracting determined in Step 4 (211). Depending on the contract, various types of rights may be discussed. For example, publication right, compensation, exclusivity, copyright ownership, and other rights are negotiated.

In Step 6, in accordance with the signed contract, the online publisher determines the form of subsequent release of the text. For example, the text may be published to the member-only pay-to-view section (212) and/or to the free viewing section (213). In an embodiment, a portion of the text is published in the free viewing section to attract initial readers. As explained above, texts are converted into text images for viewing to protect the copyright of the work.

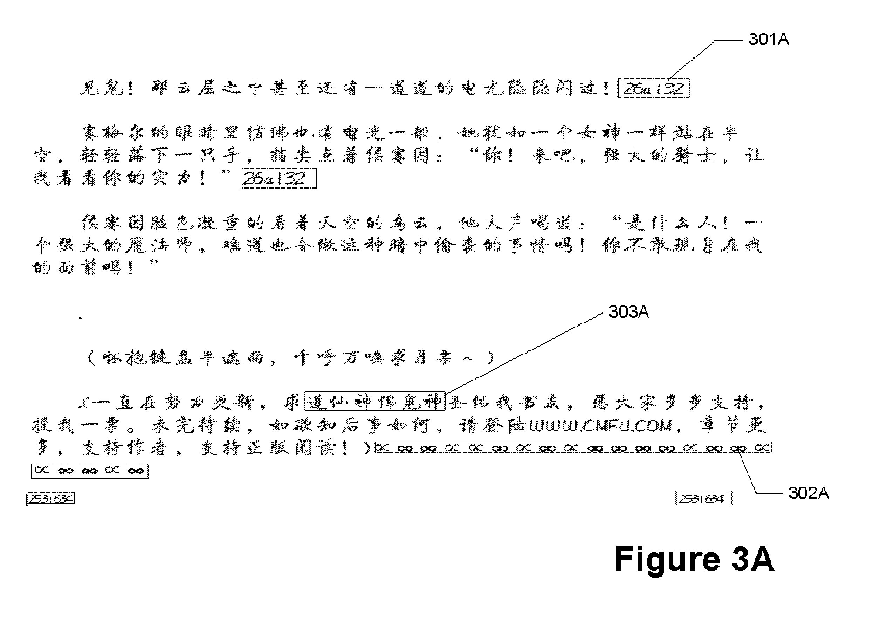

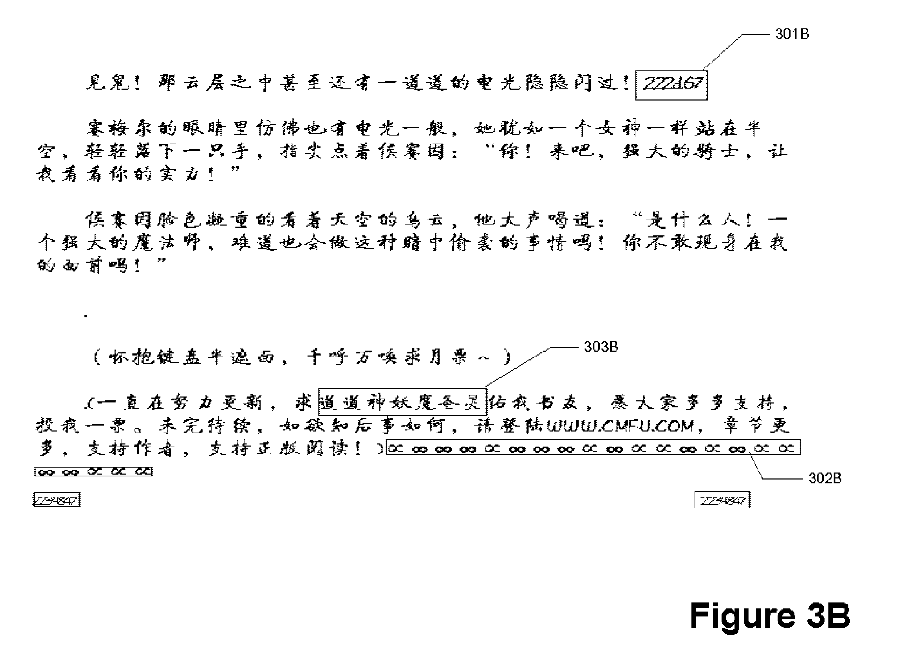

Figures 3A and 3B are a simplified diagram illustrating text images that include identification information according to embodiments of the present invention. As explained above, an online system according to the present invention dynamically converts electronic text into images files before displaying to protect copyright of the text. It is to be appreciated that, among other things, images text are much harder to duplicated using "copy and paste" technique that made copying text easy. For example, texts are formatted internally by a server into pages, which are converted into images (e.g., in JPEG, GIF, and other formats). To further protect copyright, the images are generated with a special code scheme.

Based on the registered user identification (for example, junior member/senior member/monthly paying member)), types of security information may be added to the converted image files. In a specific embodiment, a string of characters 301A and 301B are shown in Figures 3A and 3B respectively. For example, the string "26a132" is associated with a registered user, while the string "222d67" is associated with a different registered user. In addition, special character strings 303A and 303B respectively shown in Figures 3A and 3B are also associated with different users. In addition to the special characters, unique spacing may also be used to place unique identification information onto the text. In a specific embodiment, only the unique spacing scheme is employed, thereby making the scheme unnoticeable to the user. As explained above, a hash table is used to calculate spacing between punctuation marks and/or texts. For example, each user views a text-image that is unique to himself. Since the unique spacing among punctuation marks and/or texts is subtly implemented, such scheme does not impede a user's reading experience and is often unnoticeable to the user. Depending on the application, the dynamically generated text images contain registered user's identification information that is in the form of character strings, special characters, special character spacing, and/or combination thereof.

The unique coding scheme can be used to trace text images. For example, if a registered user copies a text image and posts it on a different web page, an administrator is able to determine which user copied the text images. For example, a special image processing program and the hash table is used to determine the user identification from the images. Once it is determined which user leaked the information, the administrator is able to pursue further actions, such as terminating the registered user's account, suing the user for copyright infringement, etc.

In an embodiment, after the contract has been signed, the publisher adds the contracted work submitted by the author to the member-only pay-to-view section (212) or to the free viewing section (213). During this process, the publisher determines the form of the release of the e-book. Both monthly subscribed e-books and pay-to-view e-books enter into the member-only pay-to-view member section. The author updates the content of his e-book as necessary. The reader may view the e-book according to different forms of membership. If the reader is a monthly subscription member, he may view the content of the e-book by monthly subscription. If the reader is a junior member or a senior member, he may view the content of the current pay-to-view e-book according to his membership privileges.

In Step 7, the online publisher pays the author compensation for the text. For example, the compensation may be in form of a fixed amount of licensing fee (214) or royalties on the e-book (215). The publisher gives a predetermined amount of licensing fee to the author who has licensed the copyrights of his e-book to the publisher, and gives royalties on the contract book to the author who has chosen the pay-to-view viewing mode. The publisher obtains earnings according to the terms and conditions of the agreed upon contract.

As described above, an online competition process may be used for certain online text. For texts that enter a monthly competition, each registered (and/or paying) user is allowed to vote. In a specific embodiment, the number of votes a user have depends on the level of member. For example, a new member gets one vote per month, while a senior user (a user who registered for more than 3 months) gets three votes, and each vote expires within a predetermined period of time (e.g., 30 days from issuances). There are many ways in which votes can be submitted in addition to online submission, such as voting user cell phone text messages, etc.

As explained above, winners of the competition are offered contracts for the publishing right of their work. For example, the first prize winner is offered an amount of $10 per thousand words where the second prize winner is offered $9 per thousand words, and so on.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method for publishing text online, the method comprising:
providing a user interface for entering onto a web site;
receiving user inputs;
registering the user based on the user inputs;
associating the user with an identification;
receiving a user request for viewing texts;
retrieving the texts in response to the user request;
processing the text using a text format based on the identification, the text format including spacing distance;
generating an image containing the texts in accordance with the text format; and displaying the image.

2. The method of claim 1 further comprising at least one of:
formatting the texts;
retrieving the texts from a server;
sending the image over a communication network;
associating the image associated with a portion of the texts;
receiving a payment from the user;
deleting the image;
charging an account associated with the user in response to the user request.

3. The method of claim 1 or 2 further comprising inserting a code to the image, the code being associated with the identification.

4. The method of claim 1, 2 or 3 further comprising adding one or more special characters to the image, the code being associated with the identification.

5. The method of any preceding claim wherein the spacing distance defines a distance between one or more punctuation marks.

6. The method of any preceding claim further comprising:
analyzing the image;
retrieving the identification from the image.

7. The method of any preceding claim wherein the identification comprises one or more numbers and one or more letters.

8. A system for producing a copy of a text in response to a user request, the system comprising:
user data providing means for providing user data identifying the user requesting the copies;
text providing means for providing text data representing the text from which the copy is to be produced;
text to image converting means for converting the text data to image data so that the requested copy is provided as image data; and
modifying means for causing the provided copy to be modified at least in part on the basis of data identifying the user requesting the copy.

9. A system according to claim 8, when the modifying means is arranged to cause the provided copy to be modified by adjusting spacing within the text.

10. A system according to claim 8, when the modifying means is arranged to adjust spacing between punctuation marks and/or letters or portions of text.

11. A system according to any of claims 8 to 10, when the modifying means is arranged to incorporate into a copy of at least one of a code and a character string associated with the user requesting the copy.

12. A system for identifying a copy produced by a system in accordance with any of claims 8 to 10, wherein the system comprises
means for identifying a characteristic of the modification made by the modifying means in copy image data; and
means for identifying a user associated with that characteristic.

13. A method for publishing one or more contents online, the method comprising:
providing a user interface, the user interface including log on screen; receiving user inputs from a first user;
registering the first user based on the user inputs;
receiving a first content for publishing online;
storing the first content in a storage, the storage having restrict access; analyzing the first content;
publishing the first content based on a conclusion from analyzing the first content;
selecting a pricing model;
forming a contractual relationship based on the pricing model and an agreement between user and a publisher;
receiving a second content;
processing the second content based on the contractual relationship; and
providing a payment to the first user for the second content based on the contractual relationship.

14. The method of claim 13 further comprising at least one of:
accessing the second content by a second user;
storing the second content;
the payment comprising a royalty payment;
the payment comprising a licensing fee;
the second content being available to paying users;
conferring a copyright of the first content to a publisher;
generating an image from the second content, the image including identification information associated with a registered user;
negotiating between the first author and a publisher for the contractual relationship, for example the negotiating may comprise online chatting or text messaging;
entering the first content for an publishing contest;
determining a number of votes received for the first content;
determining the contractual relationship based on a result of the publishing contest;
determining whether the user input matches with a record stored in a database; the analyzing the content comprising assess a valuation of the first content; the analyzing the content comprising determining whether the partial content includes improper material, for example the improper material comprises anti-government material, pornography, or violence.

15. A computer program product comprising program instructions to program processor means to carry out the method of any of claims 1 to 7, 13 and 14.
